# EUROPEAN PATENT APPLICATION

(11) **EP 3 819 328 A1**
(43) Date of publication of application: **12.05.2021**
(21) Application number: 19207379.9
(22) Date of filing: 06.11.2019
(51) Int. Cl.: C08G 77/26, C08K 3/22, C08K 5/00, C08K 5/17, H01M 10/60, H01M 10/62, H01M 10/65, H01M 10/653

(54) **THERMALLY-CONDUCTIVE CURABLE COMPOSITION**

(71) Applicant: 3M Innovative Properties Company, Saint Paul, MN 55133-3427 (US)
(72) Inventor: Gorgoll, Ricardo Mizoguchi, Sagamihara, Kanagawa 252-5285 (JP); Eichler, Jens, 41453 Neuss (DE); Bissinger, Peter, 82229 Seefeld (DE); Jurjevic, Simone, 41453 Neuss (DE); Steiger, Wolf, 82229 Seefeld (DE); Goeb, Siegfried Rainer, 47877 Willich (DE)
(74) Representative: Mössner, Brigitte

(57) **Abstract**

The present disclosure relates to a thermally-conductive curable composition comprising:
a) a base component comprising a cationically self-curable silicone-based oligomeric compound;
b) a curing system for the cationically self-curable silicone-based oligomeric compound; and
c) a thermally-conductive filler.

According to another aspect, the present disclosure is directed to a method of manufacturing a thermally-conductive curable composition. In yet another aspect, the disclosure relates to the use of a thermally-conductive curable composition for industrial applications, in particular for thermal management applications in the automotive industry.

## Description

### Technical Field

The present disclosure relates generally to the field of curable compositions, more specifically to the field of thermally conductive curable compositions based on cationically self-curable silicone-based oligomeric compounds. The present disclosure also relates to a method of manufacturing a thermally-conductive curable composition and to the use of a thermally-conductive curable composition for industrial applications, in particular for automotive applications, in particular for thermal management applications in the automotive industry.

### Background

Curable compositions, in particular cationically curable compositions, have been known for years as suitable for use in a variety of applications that include general-use industrial applications such as adhesives and coatings, as well as high-performance applications in healthcare industries such as e.g. in dental field. Curing of cationically curable compositions is typically performed by using curing catalysts.

With broadened use of cationically curable compositions over the years, performance requirements have become more and more demanding with respect to, in particular, curing behavior, storage stability and processability characteristics.

Examples of cationically curable compositions are described in e.g. US Pat. No. 4,167,618 (Schmitt et al.), US-A1-2008/0200585 (Klettke et al.), US-A1-2013/0030076 (Weinmann et al.), US Pat. No. 6,894,144 (Zech et al.) and US-A1-2003/0153726 (Eckhardt et al.). The cationically curable compositions described in the art typically suffer from insufficiencies including, but not limited to, formulation complexity, cost ineffectiveness, corrosiveness, use of material having potential detrimental effects to the human body, and storage instability. The known cationically curable compositions are generally also not optimal in terms of providing efficient and reproducible curing characteristics, as well as acceptable softness, elasticity or thermal stability.

Other known (liquid) thermally-conductive curable compositions are based on addition-type silicones, condensation-type silicones or polyurethanes. Examples of such compositions are described e.g. US-A1-2017/0260392 (Kitazawa et al.). Although these known solutions typically offer good elastomer properties for thermal management applications, they often suffer from unacceptable flowability properties at high thermally-conductive filler loading. Known addition-type silicones and condensation-type silicones also require using cost-inefficient curing systems based on metals such as platinum or tin.

Without contesting the technical advantages associated with the solutions known in the art, there is still a need for a thermally-conductive curable composition which overcomes the above-mentioned deficiencies.

### Summary

According to one aspect, the present disclosure relates to a thermally-conductive curable composition comprising:
a) a base component comprising a cationically self-curable silicone-based oligomeric compound;
b) a curing system for the cationically self-curable silicone-based oligomeric compound; and
c) a thermally-conductive filler.

According to another aspect, the present disclosure is directed to a method of manufacturing a thermally-conductive curable composition, comprising the steps of:
a) providing a base component comprising a cationically self-curable silicone-based oligomeric compound;
b) providing a curing system for the cationically self-curable oligomeric compound;
c) providing a thermally-conductive filler; and
d) combining the base component, the thermally-conductive filler and the curing system.

According to yet another aspect, the present disclosure relates to the use of a thermally-conductive curable composition as described above, for industrial applications, in particular for thermal management applications in the automotive industry.

### Detailed description

According to a first aspect, the present disclosure relates to a thermally-conductive curable composition comprising:
a) a base component comprising a cationically self-curable silicone-based oligomeric compound;
b) a curing system for the cationically self-curable silicone-based oligomeric compound; and
c) a thermally-conductive filler.

In the context of the present disclosure, it has been surprisingly found that a thermally-conductive curable composition as described above is provided with excellent softness, elasticity, viscosity and flowability characteristics, even at relatively high thermally-conductive filler loading. The described thermally-conductive curable composition is further provided with excellent flammability characteristics, as well as thermal and ageing stability even at relatively elevated temperatures and prolonged storage period.

In some advantageous aspects, the described thermally-conductive curable composition is further provided with advantageous curing characteristics and performance including but not limited to, curing efficiency, curing speed, curing profile reproducibility, curing profile predictability and curing profile adjustability.

This is a particularly unexpected finding as cationically self-curable oligomeric compounds, when compared to the more conventional small cationically self-curable molecules, are generally recognized as leading to various secondary, complex and undesired chemical reactions in addition to the mainly expected acid-initiated cationic polymerization reaction (e.g. linear polymeric condensation). This multitude of side polymerization reactions, which are mainly due to presence of the oligomeric backbone, are intuitively expected to detrimentally affect the curing characteristics of the initial curable composition, in particular the curing profile reproducibility, due to the substantially uncontrollable nature of the overall curing process involved.

The curable compositions as described above are further characterized by one or more of the following advantageous benefits: (i) easy and cost-effective manufacturing method, based on readily available starting materials and minimized manufacturing steps; (ii) formulation simplicity and versatility; (iii) ability to efficiently cure without the need for any substantial energy input such as elevated temperature or actinic radiation; (iv) safe handling due to non-use of material or products having detrimental effects to the human body; (v) storage and ageing stability; and (vi) ability to develop a robust and versatile curing system portfolio for thermally-conductive curable compositions which is tailorable to a broad range of specific applications.

Without wishing to be bound by theory, it is believed that these excellent characteristics and performance attributes are due in particular to the presence of a cationically self-curable silicone-based oligomeric compound, and the associated curing system.

As such, the thermally-conductive curable composition of the present disclosure is outstandingly suitable for thermal management applications in the automotive industry, in particular for the manufacturing of a thermally-conductive gap filler composition which may advantageously be used in the manufacturing of battery modules. Advantageously still, the thermally-conductive curable composition of the disclosure is suitable for automated handling and application, in particular by fast robotic equipment, due in particular to its excellent curing characteristics, dimensional stability and handling properties (in particular softness, elasticity, viscosity and flowability characteristics). The described thermally-conductive curable composition is also able to meet the most challenging fire regulation norms due its outstanding flammability characteristics.

In the context of the present disclosure, the expression "cationically self-curable silicone-based oligomeric compound" is meant to designate a silicone-based oligomeric compound which can be cured using an initiator containing or able to produce cations, especially reactive cations, whereby the silicone-based oligomeric compound cures and forms polymeric products resulting from the chemical reaction of the silicone-based oligomeric compound almost exclusively with itself. In a typical aspect, the silicone-based oligomeric backbone of the cationically self-curable silicone-based oligomeric compound remains unreactive during the curing process. The term "initiator" is meant to refer to a substance or a group of substances able to start or initiate or contribute to the curing process of the curable composition.

Cationically self-curable silicone-based oligomeric compounds for use herein are not particularly limited. Suitable cationically self-curable silicone-based oligomeric compounds for use herein may be easily identified by those skilled in the art in the light of the present disclosure.

According to one advantageous aspect of the thermally-conductive curable composition of the disclosure, the cationically self-curable silicone-based oligomeric compound for use herein is able to cure (polymerize) by cationic ring-opening polymerization. Accordingly, and in a beneficial aspect, the cationically self-curable silicone-based oligomeric compound for use in the present disclosure comprises at least two heterocyclic groups, in particular cyclic amine groups.

According to another advantageous aspect of the disclosure, the cationically self-curable silicone-based oligomeric compound for use herein is further crosslinkable, in particular able to participate in crosslinking reactions of the polymer product resulting from the curing (polymerization) of the cationically self-curable silicone-based oligomeric compounds.

In a beneficial aspect of the disclosure, the cationically self-curable silicone-based oligomeric compound has a number average molecular weight of at least 500 g/mol, at least 1000 g/mol, at least 1500 g/mol, at least 2000 g/mol, at least 2500 g/mol, or even at least 3000 g/mol. Unless otherwise indicated, the number average molecular weight is determined by GPC using appropriate techniques well known to those skilled in the art.

In another beneficial aspect of the disclosure, the cationically self-curable silicone-based oligomeric compound has a number average molecular weight no greater than 50.000 g/mol, no greater than 40.000 g/mol, no greater than 30.000 g/mol, no greater than 25.000 g/mol, or even no greater than 20.000 g/mol.

In still another beneficial aspect of the disclosure, the cationically self-curable silicone-based oligomeric compound has a number average molecular weight in a range from 500 to 50.000 g/mol, from 500 to 40.000 g/mol, from 1000 to 40.000 g/mol, from 1000 to 30.000 g/mol, from 1000 to 25.000 g/mol, or even from 1000 to 20.000 g/mol.

According to a beneficial aspect of the disclosure, the cationically self-curable silicone-based oligomeric compound is a polyfunctional compound comprising at least one cyclic amine, preferably two cyclic amines. In an exemplary aspect, the cyclic amine which may be comprised in the cationically self-curable silicone-based oligomeric compound for use herein is selected from the group consisting of aziridines, azetidines, pyrrolidines, piperidines, and any combinations or mixtures thereof.

In one advantageous aspect, the cationically self-curable silicone-based oligomeric compound for use herein is a polyfunctional compound comprising at least two aziridine functional groups. More advantageously, the cationically self-curable silicone-based oligomeric compound for use herein is a polyfunctional aziridine, in particular a bis-aziridino compound.

In a more advantageous aspect of the disclosure, the cationically self-curable silicone-based oligomeric compound is an aziridino-functional silicone-based oligomer. Advantageously, the cationically self-curable silicone-based oligomeric compound is an aziridino-functional polar silicone-based oligomer.

According to another advantageous aspect of the disclosure, the cationically self-curable silicone-based oligomeric compound is an aziridino-functional compound based on a silicone-based oligomer backbone, in particular a polar silicone-based oligomer backbone, comprising in particular a polysiloxane.

According to an advantageous aspect, the cationically self-curable silicone-based oligomeric compound for use herein is an aziridino-functional polysiloxane oligomer, in particular a N-alkyl aziridino-functional polysiloxane oligomer.

Aziridino-functional polysiloxane polymers have been found to provide a good balance of desired properties, in particular when used for the manufacturing of a thermally-conductive gap filler composition. Generally, the polysiloxane backbone provides both the desired uncured rheological properties as well as the desired cured mechanical and thermal properties, while allowing the necessary thermally-conductive filler loadings to achieve adequate thermal conductivity.

Polysiloxanes oligomers for use herein may be chosen based upon on a variety of factors, including the desired thermal and mechanical properties. Polysiloxanes oligomers generally refer to oligomers having siloxane groups in their main chain (as opposed to side chains). Suitable polysiloxane oligomers for use in the present disclosure include aliphatic polysiloxane oligomers. Such polysiloxane oligomers may include straight and branched alkylene groups connected through the siloxane linkages. In one exemplary aspect, the alkylene groups have 1 to 6 carbon atoms, e.g., 2 to 4 carbon atoms.

The polysiloxane oligomer may be a homopolymer having repeat units of only a single alkylene group or a copolymer of two or more alkylene groups. Such copolymers may be block copolymers, multi-block copolymers, alternating copolymers, or random copolymers. Such copolymers can show homogenous or gradient distributions of the monomers along the chain. In some embodiments, the copolymers may contain blocks of homopolymer, blocks of random copolymers, blocks of alternating copolymers, and combinations thereof. The polysiloxane oligomers for use herein may be prepared according to polymerization techniques well known to those skilled in the art.

According to one advantageous aspect of the present disclosure, the cationically self-curable silicone-based oligomeric compound has the following formula (1): 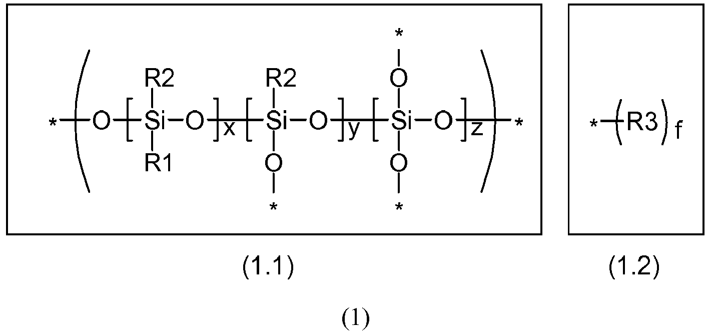 wherein:
R¹ is selected from the group consisting of H, C₁ -C₁₂ -alkyl, C₂ -C₁₂ -alkenyl, C₂ -C₁₂ - alkynyl, C₇ -C₁₅ -alkaryl, C₇ -C₁₅ -aralkyl or C₃ -C₁₂ -cycloalkyl, and these radicals may be substituted partially, fully or in a mixed manner by Cl or F and/or may contain from 0 to 5 heteroatoms from the group consisting of O, N and S;
R² is a radical from the selection of R¹ and/or R⁴; and
R³ is SiR¹₃ or SiR¹₂ R⁴,
where R⁴ has the following formula (2): 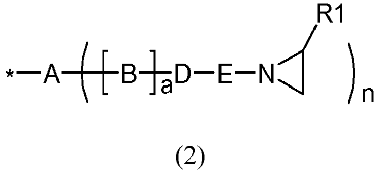 and
A is an (n+1)-valent saturated, unsaturated or aromatic, linear, branched or cyclic hydrocarbon radical, which may contain from 0 to 5 heteroatoms from the group consisting of O, N and S and comprises from 1 to 18 carbon atoms, or even from 1 to 12 carbon atoms; B is selected from the group consisting of O, S and NR¹;
D is selected from the group consisting of C(O)O, C(O)NR¹, C(O), C(O)C(O), C(O) (CH₂)m (C(O), C(S)NR¹ and CH₂;
E is a divalent saturated or unsaturated, linear, branched or cyclic hydrocarbon radical, which may contain from 0 to 5 heteroatoms from the group consisting of O, N and S and comprises from 0 to 18 carbon atoms, or even from 1 to 12 carbon atoms;
a is 0 or 1;
f is an integer from 2 to 1000, from 2 to 100, or even from 2 to 50;
n and m are each an integer from 1 to 10, from 1 to 5, or even from 1 to 3; and
x, y and z are each either 0 or integers whose sum is from 1 to 10.000, from 1 to 1000, or even from 10 to 500.

The symbol "*" in the formula (1.2) means that the valence marked in this way is linked to the positions marked "*" in fragment (1.1).

In a particular aspect, the cationically self-curable silicone-based oligomeric compound for use herein has formula (1), with the restrictions that, if x is greater than 0, y or z are less than or equal to x, less than or equal to 0.05 times x, or even 0.02 times x.

In another particular aspect, of the respective x radicals of R², up to 0.5 times x radicals are R⁴, and the others are R¹.

In the case where y + z = 0, linear polysiloxanes are present, and in the case where y + z > 0, branched polysiloxanes are present, where the formula (1) should be taken to mean that in this case the polymer may contain both D and T and/or Q units in the context of silicone nomenclature, which may be in any position in the molecule and at the linking points of the T and Q units have D chains of any desired length whose total length is x D units.

Each mention of the radical R¹ means merely a choice from the selection made under R¹, different naming can mean different radicals R¹ at each different substitution point and also on each recurring unit of a polymeric formula. This means that the structural unit (SiOR¹R²)x- is intended to mean both homopolymers having a defined R¹ and R² and also copolymers of silicones with different radicals R¹ and R², but where x denotes the number of all silicon atoms covered thereby without regard to the choice made for radicals R¹ and R². An analogous situation applies correspondingly to the factor -Si(O)R²(O*)y- and the radical R³.

In one typical aspect, no polymer-uniform polysiloxane basic chains are present. Depending on the preparation process, the polydispersity (M_{w}/Mₙ) is from 1.1 to 20 or even from 1.2 to 10.

Integers x, y, and z may be independently selected and may be zero, provided that at least one is not zero, and these values are selected such that the resulting molecular weight meets the desired conditions.

In one advantageous aspect of the disclosure, the cationically self-curable silicone-based oligomeric compound for use herein has formula (1), wherein integers x, y and z are selected such that the mean molecular weight Mₙ of the compound is in a range from 500 to 50.000 g/mol, or even from 1000 to 20.000 g/mol.

According to another advantageous aspect, the cationically self-curable silicone-based oligomeric compound for use herein comprises from 1 to 10 N-alkylaziridino groups per molecule.

According to still another advantageous aspect, the cationically self-curable silicone-based oligomeric compound for use herein has an aziridino equivalent weight in the range from 250 to 25.000 g/equivalent, or even in a range from 400 to 10.000 g/equivalent.

Particular examples of the N-alkylaziridino silicone-based oligomeric compounds for use herein are those obtained by combination of preferred representatives of the formula (1) and formula (2) in the sense of the general formulae. The linking of representatives of the formula (2) to those of the formula (1) is frequently accomplished by means of a hydrosilylation reaction.

In one typical aspect of the disclosure, the cationically self-curable silicone-based oligomeric compound having formula (1) is selected from the group consisting of linear siloxanes, comb-like silicones, T-branched siloxanes and MQ-silicone resins.

One exemplary linear siloxane according to formula (1) and for use herein has the following general structure: 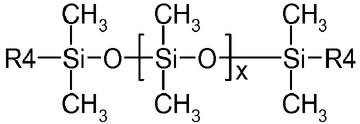 wherein
R¹ = methyl, R² = R¹, x = 0 to 500,
R³ = SiMe₂R⁴ (wherein R⁴ is according to formula (2)),
y, z = 0, and f = 2

One exemplary comb-like siloxane according to formula (1) and for use herein has the following general structure: 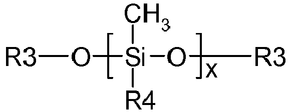 wherein
R¹ = methyl, R² = R⁴, x = 0 to 500,
R³ = SiMe₂R⁴ (wherein R⁴ is according to formula (2)) or SiR¹₃ (wherein R¹ = methyl)
y, z = 0, and f = 1 to 100.

One exemplary T-branched siloxane according to formula (1) and for use herein has the following general structure: 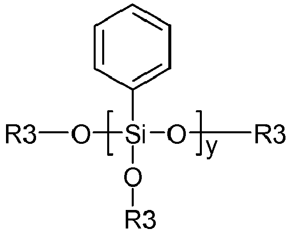 wherein
R¹ = methyl, R² = R⁴, x = 0 to 500,
R³ = SiMe₂R⁴ (wherein R⁴ is according to formula (2)) or SiR¹₃ (wherein R¹ = methyl)
y = 1 to 500, z = 0, and f = 1 to 100.

One exemplary MQ-silicone resin according to formula (1) and for use herein has the following general structure: 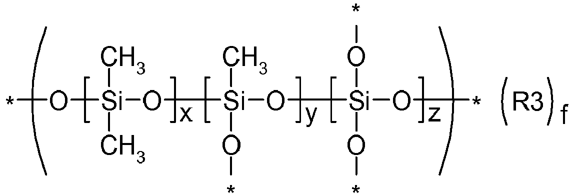 wherein
R¹ = methyl, R² = R¹, x = 0 to 500,
R³ = SiMe₂R⁴ (wherein R⁴ is according to formula (2)) or SiR¹₃ (wherein R¹ = methyl)
y = 0 to 25, z = 1, andf= 1 to 100.

According to one advantageous aspect of the disclosure, the cationically self-curable silicone-based oligomeric compound having formula (1) is selected from the group consisting of linear siloxanes.

According to a more advantageous aspect of the disclosure, the cationically self-curable silicone-based oligomeric compound for use herein has the following formula (3): 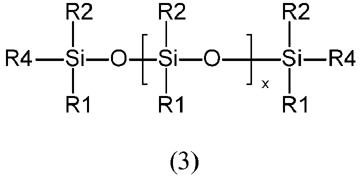 which corresponds to the compound of formula (1), wherein:
x is an integer from 0 to 500; R³ = SiR¹R²R⁴;
y, z = 0; and f = 2.

In a particularly advantageous aspect, the cationically self-curable silicone-based oligomeric compound for use in the present disclosure has a formula which corresponds to compound of formula (3), wherein: R¹ is methyl and R² is methyl.

According to still another advantageous aspect, the cationically self-curable silicone-based oligomeric compound for use in the present disclosure has a formula which corresponds to compound of formula (1), wherein R⁴ has the following structure: 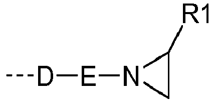 wherein:
D is selected from C(=O)O, C(=O)NR⁵, C(=O), C(=O)C(=O)N(R⁵), C(=O)(CH₂)ₚ(C(=O), C(=S)NR⁵, and CH₂;
E is an alkylene group; and
R¹ is H, a C₁ to C₁₂-Alkyl, a C₂ to C₁₂-Alkenyl, or an Aryl;
R⁵ is H, a C₁ to C₁₂-Alkyl, a C₂ to C₁₂-Alkenyl, or an Aryl;
and p is an integer.

In some aspects, R¹ is H-, Methyl-, Ethyl-, Ethenyl-, Propenyl-, Phenyl-, or Tolyl-. Exemplary aziridino functional groups include: 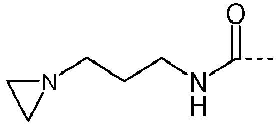 where: D = C(=O)NR⁵ (with R⁵ = H); E = 1,3-propandiyl; 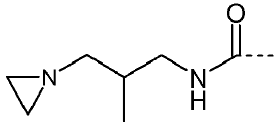 where: D = C(=O)NR⁵ (with R⁵ = H); E = 2-methyl-1,3-propandiyl; 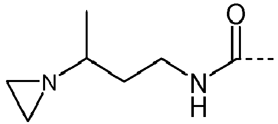 where: D = C(=O)NR⁵ (with R⁵ = H); E = 1,3-butandiyl; 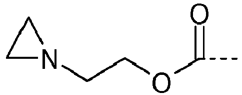 where: D = C(O)O; E = 1,2-ethandiyl; 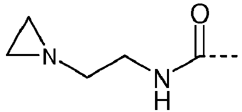 where: D = C(O)O; E = 1,2-ethandiyl; 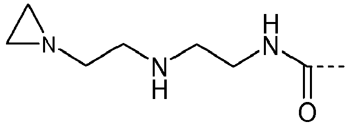 where: D = C(O)NH; E = 2-aza-1,4-butandiyl; 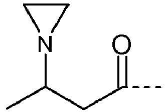 where: D = C(O); E = 2-methyl-1,2-propandiyl; 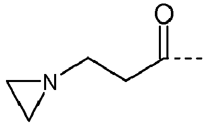 where: D = C(O); E = 1,2-ethandiyl; 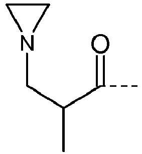 where: D = C(O); E = 1-methyl-1,2-propandiyl; 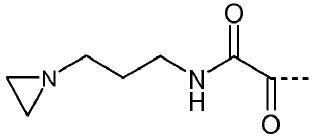 where: D = C(=O)C(=O)NR⁵ (with R⁵ = H); E = 1,3-propandiyl; 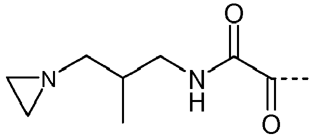 where: D = C(=O)C(=O)NR⁵ (with R⁵ = H); E = 2-methyl-1,3-propandiyl; and 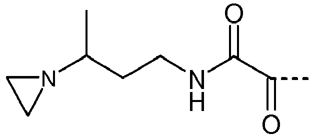 where: D = C(=O)C(=O)NR⁵ (with R⁵ = H); E = 1,3-butandiyl.

Aziridino functional (sometime referred to as aziridinyl functional) organic moieties for use herein are attached to the polysiloxane oligomer backbone in the main chain. The aziridino groups may be attached to the polysiloxane oligomer backbone through any of a variety of divalent linking groups. For example, they may be attached through carbonate-, urethane-, urea-, ester- ether- or other linkages.

According to one preferred execution of the present disclosure, the cationically self-curable silicone-based oligomeric compound for use herein is an N-alkylpropyleneimine derivative having the following formula (4): 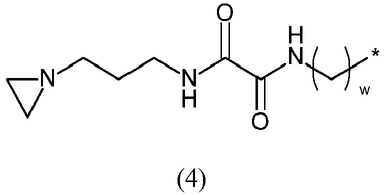 which corresponds to the compound of formula (1), wherein:
A is (CH₂)_{w}; B is NH; D is C(O)C(O)NH; and E is 1,3-propandiyl; and
wherein w is an integer from 1 to 10.

According to another preferred execution of the present disclosure, the cationically self-curable silicone-based oligomeric compound for use herein is an N-alkylbutyleneimine derivative having the following formula (5): 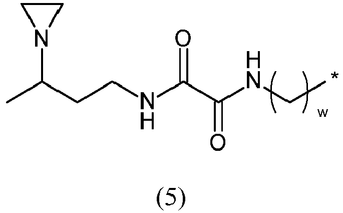 which corresponds to the compound of formula (1), wherein:
A is (CH₂)_{w}; B is NH; D is C(O)C(O)NH; and E is 1,3-butandiyl; and
wherein w is an integer from 1 to 10.

According to a particularly preferred execution of the present disclosure, the cationically self-curable silicone-based oligomeric compound for use herein has the following formula (6): 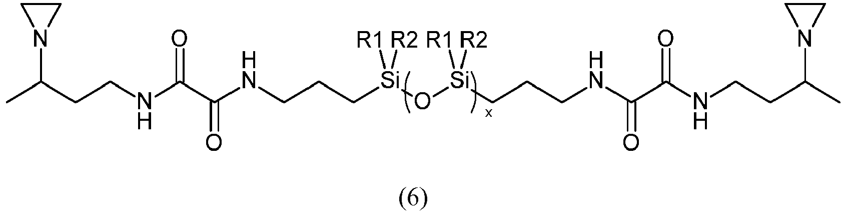 wherein:
R¹ and R² are as defined in formula (1); and
x is an integer in a range from 1 to 10,000, from 1 to 1000, or even from 10 to 500; and x is in particular selected such that the calculated number average molecular weight of the cationically silicone-based self-curable oligomeric compound is in a range from 1000 to 20.000 g/mol.

According to still another preferred execution of the present disclosure, the cationically self-curable silicone-based oligomeric compound for use herein has a formula which corresponds to the compound of formula (6), wherein: R¹ is methyl and R² is methyl.

Curing systems for use herein are not particularly limited, as long as they are able to cure the cationically self-curable silicone-based oligomeric compound for use herein. Suitable curing systems for use herein may be easily identified by those skilled in the art in the light of the present disclosure.

According to one typical aspect of the curable composition according to the disclosure, the curing system for the cationically self-curable silicone-based oligomeric compound is initiated at a temperature T1 which is in particular no greater than 90°C, no greater than 80°C, no greater than 60°C, no greater than 50°C, no greater than 40°C, no greater than 30°C, no greater than 25°C, no greater than 20°C, or even no greater than 15°C.

In one advantageous aspect of the disclosure, the curing system of the cationically self-curable silicone-based oligomeric compound for use herein is able to cure the curable composition without the need for any substantial energy input such as elevated temperature or actinic radiation. The curing temperature may be varied as desired, in particular throughout the cure process in order to control the curing properties.

In a more advantageous aspect, the curable composition of the present disclosure may be cured at relatively low temperature, such as e.g., room temperature (in particular 23°C).

In another advantageous aspect of the disclosure, the curing system for the cationically self-curable silicone-based oligomeric compound is initiated at a temperature T1 which is in a range from -10°C to 85°C, from 0°C to 80°C, from 5°C to 60°C, from 5°C to 50°C, from 10°C to 40°C, or even from 15°C to 35°C.

According to one advantageous aspect, the curing system for the cationically self-curable silicone-based oligomeric compound comprises an ionogenic compound comprising an anion and ammonium as a cation.

According to another advantageous aspect, the curing system for the cationically self-curable silicone-based oligomeric compound comprises an ionogenic compound comprising an anion and an aminium ion as a cation.

Ionogenic compounds for use herein are not particularly limited. Any ionogenic compounds commonly known in the art of curable compositions may be used in the context of the present disclosure, as long as they comprise (an anion and) an ammonium or an aminium as a cation. Suitable ionogenic compounds for use herein may be easily identified by those skilled in the art in the light of the present disclosure.

According to one typical aspect of the present disclosure, the ionogenic compound for use herein is an acid generating compound, in particular a protonating agent.

In one advantageous aspect of the disclosure, the curing system for the cationically self-curable oligomeric compound results from the protonation of ammonia by a Broensted acid or a precursor of a Broensted acid. More advantageously, the Broensted acid for use herein has a pKa no greater than 2.5.

In a more advantageous aspect, the Broensted acid for use herein is selected from the group consisting of hexafluorophosphoric acid, hexafluoroantimonic acid, tetrafluoroboric acid, sulfonic acids, phosphonic acids, fluorinated organic acids, polymeric acids, saturated carboxylic acids, unsaturated carboxylic acids, and any combinations or mixtures thereof.

According to one particularly advantageous aspect of the disclosure, the Broensted acid for use herein is selected from the group consisting of hexafluorophosphoric acid, tetrafluoroboric acid, sulfonic acids, saturated carboxylic acids, and any combinations or mixtures thereof.

According to the advantageous aspect according to which the Broensted acid for use herein is selected from the group of sulfonic acids, the latter may be beneficially selected from the group consisting of alkylsulphonic acids, fluoroalkylsulphonic acids, alkylbenzenesulphonic acids, and any combinations or mixtures thereof.

According to an even more advantageous aspect, the sulfonic acid for use as a Broensted acid is selected from the group consisting of p-toluenesulphonic acid, undecylbenzenesulphonic acid, dodecylbenzenesulphonic acid, tridecylbenzenesulphonic acid, trifluoromethanesulphonic acid, methylsulphonic acid, and any mixtures thereof.

Anions for use herein as part of the ionogenic compound are not particularly limited. As will be apparent to the skilled person, suitable anions may be advantageously selected to form a reasonably stable albeit reactive ionogenic compound in combination with ammonium or aminium cation. Suitable anions for use herein as part of the ionogenic compound may be easily identified by those skilled in the art in the light of the present disclosure.

According to an advantageous aspect of the disclosure, the anion of the ionogenic compound is selected from the group consisting of low- and non-coordinating anions, and any combinations or mixtures thereof. More advantageously, the anion of the ionogenic compound is selected from the group consisting of low-nucleophilic anions.

The classification of the anions as to their nucleophilic nature is made, for example, in the manner described by C. G. Swain, et al. in J. Am. Chem. Soc., 75, page 141 (1953) or by A. B. Ash, et al. in J. Org. Chem., 34, page 4071 (1969).

In one advantageous execution of the curable composition, the anion of the ionogenic compound for use herein is selected from the group consisting of PF₆⁻, BF₄⁻, SbF₆⁻, AsF₆⁻, CF₃SO₃⁻, and SbF₅OH⁻. More advantageously, the anion of the ionogenic compound for use herein is selected from the group consisting of PF₆⁻, BF₄⁻, SbF₆⁻, AsF₆⁻ , and SbF₅OH⁻.

According to a particularly preferred aspect of the curable composition, the anion of the ionogenic compound for use in the present disclosure is selected from the group consisting of PF₆⁻and BF₄⁻.

According to another particularly preferred aspect of the curable composition of the present disclosure, the ionogenic compound for use herein is selected from the group consisting of ammonium tetrafluoroborate and ammonium hexafluorophosphate.

Aminium ions for use herein as part of the ionogenic compound are not particularly limited. As will be apparent to the skilled person, suitable aminium cations may be advantageously selected to form a reasonably stable albeit reactive ionogenic compound in combination with the anion. Suitable aminium cations for use herein as part of the ionogenic compound may be easily identified by those skilled in the art in the light of the present disclosure.

According to a typical aspect of the disclosure, the aminium ion of the ionogenic compound results from the protonation of a N-substituted amine, in particular a primary, secondary or tertiary N-substituted amine. In an advantageous aspect, the N-substituted amine for use herein has a pKa of at least 7 or greater.

According to an advantageous aspect of the disclosure, the aminium ion of the ionogenic compound for use herein is selected from the group consisting of primary aminium cations, secondary aminium cations, tertiary aminium cations, and any mixtures thereof.

According to a more advantageous aspect of the disclosure, the aminium ion of the ionogenic compound is selected from the group consisting of secondary aminium cations, tertiary aminium cations, and any mixtures thereof.

According to an even more advantageous aspect of the disclosure, the aminium ion of the ionogenic compound is selected from the group consisting of tertiary aminium cations, and any mixtures thereof.

In another beneficial aspect, the curing system for the cationically self-curable silicone-based oligomeric compound comprises at least one Broensted acid or a precursor of a Broensted acid as defined above and at least one antacid-acting compound.

Advantageously, the antacid-acting compound for use herein is selected from the group consisting of oxides, hydroxides, carbonates or carboxylates of an element of aluminum, chromium, copper, germanium, manganese, lead, antimony, tellurium, titanium or zinc, and any combinations or mixtures thereof.

More advantageously, the antacid-acting compound for use herein is selected to comprise zinc oxide, and the Broensted acid is in particular selected from the group consisting of sulfonic acids, more in particular from the group consisting of alkylsulphonic acids, arylsulphonic acids, alkylbenzenesulphonic acids, and any combinations or mixtures thereof.

According to a more advantageous aspect, the antacid-acting compound for use herein is selected to comprise zinc oxide, and the Broensted acid is selected from the group consisting of p-toluenesulphonic acid and dodecylbenzensulphonic acid, in particular p-toluenesulphonic acid.

According to an even more advantageous aspect, the curing system for the cationically self-curable silicone-based oligomeric compound comprises zinc p-toluenesulphonate.

In one particularly advantageous aspect of the thermally-conductive curable composition according to the present disclosure, the curing system for the cationically self-curable silicone-based oligomeric compound further comprises water.

According to one advantageous aspect, the curable composition according to the disclosure is a thermally-conductive gap filler composition.

In the context of the present disclosure, it has been indeed surprisingly discovered that the curable composition of the present disclosure is outstandingly suitable for thermal management applications, in particular for the manufacturing of a thermally-conductive gap filler composition which may advantageously be used in the manufacturing of battery modules for use in the automotive industry. This is in particular due to the outstanding characteristics and performance as to curing efficiency, curing speed, curing profile reproducibility, curing profile predictability and curing profile adjustability provided by the curable composition according to the disclosure, in combination with the other advantageous properties described throughout the present description. These advantageous properties include, but are not limited to, the excellent softness, elasticity, viscosity and flowability characteristics, even at relatively high thermally-conductive filler loading, the excellent flammability characteristics, as well as the outstanding thermal and ageing stability even at relatively elevated temperatures and prolonged storage period.

The thermally-conductive gap filler compositions based on the curable composition according to the disclosure are particularly suitable for use in batteries and battery assemblies, specifically the types of batteries used in electric and hybrid electric automobiles. The usefulness of the compositions, however, is not so limited. The thermally-conductive gap filler compositions described herein may find use wherever such materials are used, for instance, in electronics (e.g., consumer electronics) or electrical applications.

Thermal management plays an important role in many electronics or electrical applications. For example, challenges for integrating lithium-ion batteries into electric vehicle battery packs include performance, reliability and safety. Proper thermal management of battery assemblies contributes to addressing each of these challenges. This includes both first level thermal management where battery cells are assembled in a battery module, and second level thermal management where these modules are assembled into battery subunits or battery systems. Thermal management can also be important in the cooling of battery control units, as well as non-battery electronic applications.

Currently, thermal management for battery assemblies relies on curable-liquid gap fillers or pads. The curable liquids flow during assembly and can adjust to dimensional variations before being cured. Also, the liquids can be applied at the time of assembly allowing greater design flexibility. However, the current uncured and cured compositions have several limitations including the presence of contaminants, as discussed below. Pads comprise a pre-determined lay-out of cured material; thus, pads have a reduced tendency to introduce contaminants. However, the cured materials may not provide sufficient conformability to accommodate the range of dimensional variations seen in typical battery assemblies. Also, design changes can be more costly and complex, as new design lay-outs must be generated.

In the context of the present disclosure, it has been unexpectedly found that thermally-conductive gap filler compositions based on the curable composition according to the disclosure may substantially overcome the above-mentioned deficiencies.

In some aspects, thermally-conductive gap filler compositions based on the curable composition according to the disclosure may provide one or more of the following advantageous benefits: (i) easily adjustable cure profile to allow adaption to specific working cycles; (ii) advantageous rheological behavior of the uncured composition; (iii) sufficient open time before cure to allow components to be applied and positioned; (iv) rapid cure after the open time; (v) curing without additional energy input, in particular thermal energy or actinic radiation; (vi) compositions curable without the need for expensive catalysts such as platinum; (vii) advantageous wetting behavior on parts; (viii) stability of the cured composition; (ix) advantageous softness and spring back (recovery on deformation) properties to ensure good contact under use conditions; (x) absence of air inclusions and gas or bubble formation to minimize reduction in thermal conductivity; (xi) absence of contaminants, such as e.g. unreacted components and low molecular weight materials, or volatile components; and (xii) good bonding between sequentially cured layers of the same material.

According to one exemplary aspect, the thermally-conductive curable composition for use herein comprises at least 30% by volume, at least 50% by volume, at least 65% by volume, at least 70% by volume, at least 75% by volume, or even at least 80% by volume of the thermally-conductive filler, based on the total volume of the curable composition. The amount of thermally-conductive filler for use in the thermally-conductive curable composition may be advantageously varied and appropriately chosen depending on the desired level of thermal conductivity.

Generally, any known thermally conductive fillers may be used, although electrically insulating fillers may be preferred where breakthrough voltage is a concern. Suitable electrically insulating, thermally conductive fillers include ceramics such as oxides, hydrates, silicates, borides, carbides, and nitrides. Suitable oxides include, e.g., silicon oxide and aluminum oxide. Suitable nitrides include, e.g., boron nitride and aluminum nitride. Suitable carbides include, e.g., silicon carbide. Other thermally conducting fillers include graphite and metals such as e.g. aluminum and copper. Through-plane thermal conductivity is most critical in this application. Therefore, generally symmetrical fillers (e.g., spherical fillers) may be preferred in some particular executions, as asymmetrical fibers, flakes, or plates may tend to align in the in-plane direction.

To aide in dispersion and increase filler loading, the thermally conductive fillers may be surface-treated or coated. Generally, any known surface treatments and coatings may be suitable.

According to one advantageous aspect of the disclosure, the thermally-conductive filler for use herein is selected from the group consisting of ceramics, metals, graphite, and any combinations or mixtures thereof.

The thermally-conductive curable compositions may advantageously comprise additional ingredients depending on the targeted applications and performance attributes.

According to one exemplary aspect, the thermally-conductive curable composition of the present disclosure further comprises at least one of a plasticizer, a flame retardant and flame-retardant plasticizer.

In one particular aspect, the thermally-conductive gap curable composition of the present disclosure may provide flame retardancy and therefore include solid flame-retardant additives that may use intumescent materials (for example, expandable graphite and phosphorous compounds). Other solid flame-retardant additives include aluminum hydroxide compounds (for instance, Aluminum trihydroxide) and ammonium salts (such as e.g. ammonium tetrafluoroborate and ammonium hexafluorophosphate). Specific solid flame-retardant materials include those selected from the group consisting of an intumescent material, an aluminum hydroxide, and combinations thereof. Specifically, the intumescent material may be selected from the group consisting of phosphorous and expandable graphite. Furthermore, when the thermally-conductive gap filler is a phosphorous material, it may be selected from red phosphorous and white phosphorous.

In one advantageous aspect, it may be beneficial to use liquid flame-retardant plasticizer such as a phosphoric acid alkyl ester. For instance, useful liquid flame retardant plasticizers include those having the general formula OP(OR¹)(OR²)(OR³), wherein each of R¹, R² and R³ is independently selected from a C₁-C₁₀ aliphatic group (no aromatic ring) and a C₆-C₂₀ aryl group, a C₇-C₃₀ alkylaryl group, and a C₇-C₃₀ arylalkyl group.

In one particularly advantageous aspect, the liquid flame-retardant plasticizer for use in the thermally-conductive curable composition of the present disclosure comprises 2-ethylhexyldiphenyl phosphate.

According to an alternative aspect, the curable composition according to the disclosure is substantially free of flame-retardant, in particular flame-retardant based on minerals, organohalogen compounds, and organophosphorus compounds.

In one advantageous aspect, the curable composition according to the disclosure further comprises a silicone (inert) fluid, in particular a polydialkylsiloxane, more in particular a polydimethylsiloxane.

In the context of the present disclosure, it has indeed been surprisingly found that the inclusion of a silicone fluid into the thermally-conductive curable composition provides an advantageous softening effect by reducing the hardness of the resulting curable composition.

According to one advantageous aspect, the silicone fluid for use herein comprises a polysiloxane oligomer backbone (substantially) identical to the polysiloxane oligomer backbone of the cationically self-curable silicone-based oligomeric compound. Advantageously, the silicone fluids for use herein are deprived of the aziridino functional organic moieties which are typically attached to the polysiloxane oligomer backbone of the cationically self-curable silicone-based oligomeric compound.

The reactants and reagents present in the curable composition of the disclosure (in particular, the cationically self-curable silicone-based oligomer compound, the curing system and thermally-conductive filler) may be used in any appropriate amount depending on the targeted application and characteristics expected for the thermally-conductive curable composition and the resulting cured composition. Accordingly, the respective amounts of the various reactants and reagents may be suitably adjusted and tailored to the targeted application and anticipated performance attributes.

In one advantageous aspect, the curable composition of the present disclosure is in the form of a one-part composition, which comprises in particular:
a) from 2 to 20 wt.%, from 2 to 18 wt.%, from 3 to 18 wt.%, from 3 to 16 wt.%, from 4 to 15 wt.%, or even from 4 to 10 wt.%, of the cationically self-curable silicone-based oligomeric compound;
b) from 0.2 to 3 wt.%, from 0.2 to 2.5 wt.%, from 0.3 to 2 wt.%, from 0.5 to 2 wt.%, from 0.5 to 1.8 wt.%, from 0.5 to 1.5 wt.%, from 0.6 to 1.2 wt.%, or even from 0.8 to 1.2 wt.%, of the curing system;
c) from 50 to 98 wt.%, from 55 to 98 wt.%, from 60 to 96 wt.%, from 70 to 96 wt.%, from 75 to 96 wt.%, from 80 to 96 wt.%, or even from 85 to 95 wt.%, of the thermally-conductive filler; and
d) optionally, from 1 to 10 wt.%, from 1 to 9 wt.%, from 1.5 to 8 wt.%, from 2 to 8 wt.%, from 2 to 6 wt.%, or even from 2 to 5 wt.%, of a silicone fluid.

In another advantageous aspect, the curable composition of the present disclosure is in the form of a two-part composition having a first part and a second part, wherein:
a) the first part comprises the curing system; and
b) the second part comprises the base component comprising the cationically self-curable silicone-based oligomeric compound, and optionally, the silicone fluid;
wherein the thermally-conductive filler is present in the first part and/or in the second part, and wherein the first part and the second part are kept separated prior to combining the two parts and forming the cured composition.

A two-part curable composition is particularly advantageous when curing at low temperature (e.g. room temperature of about 23°C) is targeted, or when the curing is anticipated to be performed without a substantial energy input such as elevated temperature or actinic radiation.

The non-reactive components of the curable composition may be distributed as desired between the two parts. In another aspect of the disclosure, some of the non-reactive components may be present in both parts. It may be desirable to distribute the various components such that the subsequent mixing of the two parts is made easier, in particular in terms of viscosity matching.

The curable composition of the present disclosure is particularly suitable for manufacturing a cured composition provided with excellent characteristics and performance as to curing efficiency, curing speed, and curing profile adjustability. As such, the curable composition based on the curing system as described above readily allows developing a robust and versatile curing portfolio for curable compositions which is tailorable to a broad range of specific applications. These performance attributes are extremely valuable in the context of any industrial manufacturing processes and processing steps.

According to one exemplary aspect, the thermally-conductive curable composition of the disclosure is curable at 23°C at a curing percentage greater than 90%, greater than 95%, greater than 98%, or even greater than 99%, after a curing time no greater than 72 hours, no greater than 48 hours, or even no greater than 24 hours.

Unless otherwise stated, the curing percentage and curing time are measured by rheology and hardness techniques well known to those skilled in the art. Typically, those values are measured at 23°C using a Rheometer DHR 2 (available from TA Instruments), with a Plate/Plate of 25mm, in oscillation mode (1 Hz), and a Durometer Type A. Curing time start is indicated in the rheometric curve when G' and G" begin to increase. The end of curing time is recorded when the curable composition achieves 90% of its final hardness.

According to another exemplary aspect, the thermally-conductive curable composition of the disclosure is curable at 23°C at a curing percentage greater than 90%, greater than 95%, greater than 98%, or even greater than 99%, after a curing time no greater than 210 minutes, no greater than 180 minutes, no greater than 150 minutes, no greater than 120 minutes, no greater than 100 minutes, no greater than 90 minutes, no greater than 80 minutes, no greater than 70 minutes, no greater than 60 minutes, no greater than 50 minutes, no greater than 40 minutes, or even no greater than 30 minutes.

The curing time may be adjusted as desired depending on the targeted applications and manufacturing requirements.

According to an advantageous aspect of the disclosure, the curable composition is curable without using any actinic radiation, in particular UV light, or any metallic catalyst, in particular platinum catalyst.

According to an exemplary aspect, the curable composition according to the disclosure has a thermal conductivity of at least 0.5 W/mK, at least 1.0 W/mK, at least 2.0 W/mK, at least 3.0 W/mK, at least 4.0 W/mK, at least 5.0 W/mK, at least 6.0 W/mK, at least 7.0 W/mK, at least 8.0 W/mK, at least 9.0 W/mK, or even at least 10 W/mK, when measured according to the test method described in the experimental section.

According to another exemplary aspect, the thermally-conductive curable composition according to the disclosure has a thermal conductivity of from 0.5 to 10 W/mK, from 1 to 8 W/mK, from 2 to 6 W/mK, from 3 to 5 W/mK, or even from 4 to 5 W/mK, when measured according to the test method described in the experimental section.

According to an advantageous aspect, the curable composition has a mass variation of less than 2 wt.% at a temperature greater than 250°C, greater than 300°C, greater than 350°C, or even greater than 400°C, when measured according to the thermogravimetric (TGA) test method described in the example section.

According to still another advantageous aspect, the thermally-conductive curable composition as described herein has a V-0 classification, when measured according to the UL-94 standard flammability test method.

In another aspect, the present disclosure is directed to a cured composition obtainable by at least partially curing the curable composition as described above;
In still another aspect, the present disclosure relates to a cured composition comprising the self-curing reaction product of the cationically self-curable silicone-based oligomeric compound, wherein the self-curing reaction product is substantially fully cured and has, in particular, a curing percentage greater than 90%, greater than 95%, greater than 98%, or even greater than 99%.

According to an advantageous aspect of the cured composition, the self-curing reaction product of the cationically self-curable silicone-based oligomeric compound comprises or consists of a polysiloxane imine, in particular a linear or branched polysiloxane ethylenimine.

All the particular and preferred aspects relating to, in particular, the cationically self-curable silicone-based oligomeric compound, the curing system, the thermally-conductive filler, and the thermally-conductive gap filler composition which were described hereinabove in the context of the curable composition, are fully applicable to the cured composition as described above.

According to another aspect, the present disclosure is directed to a battery module comprising a plurality of battery cells connected to a first base plate by a first layer of a first thermally-conductive gap filler composition as described above.

According to still another aspect, the present disclosure relates to a battery subunit comprising a plurality of battery modules connected to a second base plate by a second layer of a second thermally-conductive gap filler composition, wherein each battery module comprises a plurality of battery cells connected to a first base plate by a first layer of a first thermally-conductive gap filler composition, wherein the first thermally-conductive gap filler composition and the second thermally-conductive gap filler composition are independently selected, and wherein each is a thermally-conductive gap filler composition as described above.

All the particular and preferred aspects relating to, in particular, the cationically self-curable silicone-based oligomeric compound, the curing system, the thermally-conductive filler, and the thermally-conductive gap filler composition which were described hereinabove in the context of the curable composition, are fully applicable to the battery module and battery subunit as described above.

Suitable battery modules, battery subunits and methods of manufacturing thereof for use herein are described e.g. in EP-A1-3352290 (Goeb et al.), in particular in FIG.1 to FIG.3 and in paragraphs [0016] to [0035], the content of which is herewith fully incorporated by reference.

According to another aspect, the present disclosure is directed to a method of manufacturing a battery module, which comprises the steps of:
a) applying a first layer of a first thermally-conductive gap filler composition as described above to a first surface of a first base plate;
b) attaching a plurality of battery cells to the first layer to connect the battery cells to the first base plate; and
c) curing the first thermally-conducting gap filler composition.

In yet another aspect, the present disclosure relates to a method of manufacturing a battery subunit, which comprises the steps of:
a) applying a second layer of a second thermally-conductive gap filler composition as described above to a first surface of a second base plate;
b) attaching a plurality of battery modules to the second layer to connect the battery modules to the second base plate; and
c) curing the second thermally-conducting gap filler composition.

According to still another aspect of the present disclosure, it is provided a method of manufacturing a thermally-conductive curable composition, comprising the steps of:
a) providing a base component comprising a cationically self-curable silicone-based oligomeric compound;
b) providing a curing system for the cationically self-curable silicone-based oligomeric compound;
c) providing a thermally-conductive filler; and
d) combining the base component, the thermally-conductive filler and the curing system.

Reproducing the method of manufacturing a curable composition as described above is well within the capabilities of those skilled in the art reading the present disclosure.

The method for preparing a thermally-conductive curable composition may comprise dissolving a curing system for a cationically self-curable silicone-based oligomeric compound in a solvent, mixing the dissolved curing system with the base component comprising the cationically self-curable silicone-based oligomeric compound, in the presence of a thermally-conductive filler which is advantageously incorporated in various steps. The thermally-conductive filler may be mixed with the curing system before mixing the curing system with the base component, or it may be mixed with the base component before mixing the curing system with the base component, or a first and second amount of thermally-conductive filler may be mixed into each of the curing system and the base component before mixing the two parts together.

In one particular aspect of the method of manufacturing a thermally-conductive curable composition, in particular a two-part curable composition, the thermally-conductive filler is first mixed with all the unreactive liquids (such as e.g. solvents, liquid flame retardant or dispersant) of the first part of the two-part curable composition, and then the curing system and solvent is added to this mixture, thereby forming the first part of the two-part curable composition. This first part is then combined with the second part comprising the base component comprising the cationically self-curable silicone-based oligomeric compound.

All the particular and preferred aspects relating to, in particular, the cationically self-curable silicone-based oligomeric compound, the curing system, the thermally-conductive filler, and the thermally-conductive gap filler composition which were described hereinabove in the context of the curable composition, are fully applicable to the method for preparing a curable composition, to the method of manufacturing a battery module and to the method of manufacturing a battery subunit.

According to still another aspect, the present disclosure relates to the use of a thermally-conductive curable composition or a cured composition as described above, for industrial applications, in particular for automotive applications, more in particular for thermal management applications in the automotive industry.

According to yet another aspect, the present disclosure relates to the use of a thermally-conductive curable composition or a cured composition as described above, for the manufacturing of a thermally-conductive gap filler composition.

In yet another aspect, the present disclosure relates to the use of an acid-curable composition or a cured composition as described above, for the manufacturing of a battery module comprising a plurality of battery cells, in particular for use in the automotive industry.

In yet another aspect, the present disclosure relates to the use of a thermally-conductive curable composition or a cured composition, for the manufacturing of a battery module comprising a plurality of battery cells, in particular for use in the automotive industry.

In yet another aspect, the present disclosure relates to the use of a cationically self-curable silicone-based oligomeric compound as described above, for the manufacturing of a thermally-conductive curable composition.

According to still another aspect, the present disclosure is directed to the use of a cationically self-curable silicone-based oligomeric compound as described above, for thermal management applications, in particular in the automotive industry.

According to yet another aspect, the present disclosure is directed to the use of a cationically self-curable silicone-based oligomeric compound as described above, for the manufacturing of a thermally-conductive gap filler composition.

In yet another aspect, the present disclosure relates to the use of a cationically self-curable silicone-based oligomeric compound as described above, for the manufacturing of a battery module comprising a plurality of battery cells, in particular for use in the automotive industry.
Item 1 is a thermally-conductive curable composition comprising:
   a) a base component comprising a cationically self-curable silicone-based oligomeric compound;
   b) a curing system for the cationically self-curable silicone-based oligomeric compound; and
   c) a thermally-conductive filler.
Item 2 is a curable composition according to item 1, wherein the cationically self-curable silicone-based oligomeric compound cures by cationic ring-opening polymerization.
Item 3 is a curable composition according to any of item 1 or 2, wherein the cationically self-curable silicone-based oligomeric compound is further crosslinkable.
Item 4 is a curable composition according to any of the preceding items, wherein the cationically self-curable silicone-based oligomeric compound has a number average molecular weight of at least 500 g/mol, at least 1000 g/mol, at least 1500 g/mol, at least 2000 g/mol, at least 2500 g/mol, or even at least 3000 g/mol.
Item 5 is a curable composition according to any of the preceding items, wherein the cationically self-curable silicone-based oligomeric compound has a number average molecular weight no greater than 50.000 g/mol, no greater than 40.000 g/mol, no greater than 30.000 g/mol, no greater than 25.000 g/mol, or even no greater than 20.000 g/mol.
Item 6 is a curable composition according to any of the preceding items, wherein the cationically self-curable silicone-based oligomeric compound has a number average molecular weight in a range from 500 to 50.000 g/mol, from 500 to 40.000 g/mol, from 1000 to 40.000 g/mol, from 1000 to 30.000 g/mol, from 1000 to 25.000 g/mol, or even from 1000 to 20.000 g/mol.
Item 7 is a curable composition according to any of the preceding items, wherein the cationically self-curable silicone-based oligomeric compound is a polyfunctional compound comprising at least one cyclic amine, preferably two cyclic amines.
Item 8 is a curable composition according to item 7, wherein the cyclic amine is selected from the group consisting of aziridines, azetidines, pyrrolidines, piperidines, and any combinations or mixtures thereof.
Item 9 is a curable composition according to any of the preceding items, wherein the cationically self-curable silicone-based oligomeric compound is a polyfunctional compound comprising at least two aziridine functional groups.
Item 10 is a curable composition according to any of the preceding items, wherein the cationically self-curable silicone-based oligomeric compound is a polyfunctional aziridine, in particular a bis-aziridino compound.
Item 11 is a curable composition according to any of the preceding items, wherein the cationically self-curable silicone-based oligomeric compound is an aziridino-functional silicone-based oligomer, in particular an aziridino-functional polar silicone-based oligomer.
Item 12 is a curable composition according to any of the preceding items, wherein the cationically self-curable silicone-based oligomeric compound is an aziridino-functional compound based on a silicone-based oligomer backbone, in particular a polar (linear or branched) silicone-based oligomer backbone, comprising in particular a polysiloxane.
Item 13 is a curable composition according to any of the preceding items, wherein the cationically self-curable silicone-based oligomeric compound is an aziridino-functional (linear or branched) polysiloxane oligomer, in particular a N-alkyl aziridino-functional (linear or branched) polysiloxane oligomer.
Item 14 is a curable composition according to any of the preceding items, wherein the cationically self-curable silicone-based oligomeric compound has the following formula (1): 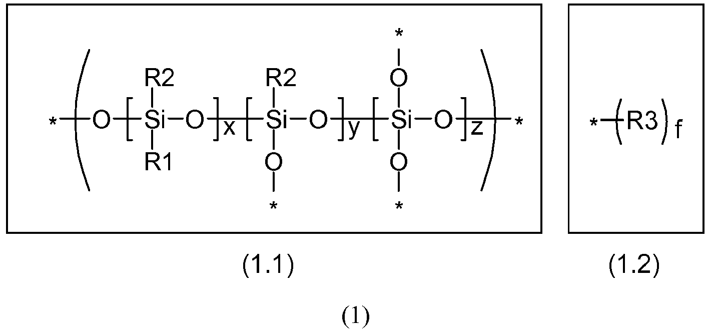 wherein:
   R¹ is selected from the group consisting of H, C₁ -C₁₂ -alkyl, C₂ -C₁₂ -alkenyl, C₂ - C₁₂ -alkynyl, C₇ -C₁₅ -alkaryl, C₇ -C₁₅ -aralkyl or C₃ -C₁₂ -cycloalkyl, and these radicals may be substituted partially, fully or in a mixed manner by Cl or F and/or may contain from 0 to 5 heteroatoms from the group consisting of O, N and S;
   R² is a radical from the selection of R¹ and/or R⁴; and
   R³ is SiR¹₃ or SiR¹₂ R⁴,
   where R⁴ has the following formula (2): 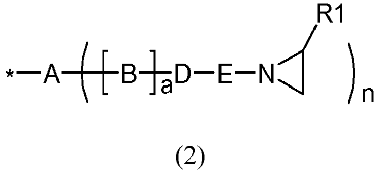 and
   A is an (n+1)-valent saturated, unsaturated or aromatic, linear, branched or cyclic hydrocarbon radical, which may contain from 0 to 5 heteroatoms from the group consisting of O, N and S and comprises from 1 to 18 carbon atoms, or even from 1 to 12 carbon atoms;
   B is selected from the group consisting of O, S and NR¹;
   D is selected from the group consisting of C(O)O, C(O)NR¹, C(O), C(O)C(O), C(O) (CH₂)m (C(O), C(S)NR¹ and CH₂;
   E is a divalent saturated or unsaturated, linear, branched or cyclic hydrocarbon radical, which may contain from 0 to 5 heteroatoms from the group consisting of O, N and S and comprises from 0 to 18 carbon atoms, or even from 1 to 12 carbon atoms;
   a is 0 or 1;
   f is an integer from 2 to 1000, from 2 to 100, or even from 2 to 50;
   n and m are each an integer from 1 to 10, from 1 to 5, or even from 1 to 3; and
   x, y and z are each either 0 or integers whose sum is from 1 to 10.000, from 1 to 1000, or even from 10 to 500.
Item 15 is a curable composition according to item 14, with the restrictions that, if x is greater than 0, y or z are less than or equal to x, less than or equal to 0.05 times x, or even 0.02 times x.
Item 16 is a curable composition according to any of item 14 or 15, wherein the cationically self-curable silicone-based oligomeric compound comprises from 1 to 10 N-alkylaziridino groups per molecule.
Item 17 is a curable composition according to any of items 14 to 16, wherein the cationically self-curable silicone-based oligomeric compound has an aziridino equivalent weight in the range from 250 to 25.000 g/equivalent, or even from 400 to 10.000 g/equivalent.
Item 18 is a curable composition according to any of items 14 to 17, wherein the cationically self-curable silicone-based oligomeric compound has the following formula (3): 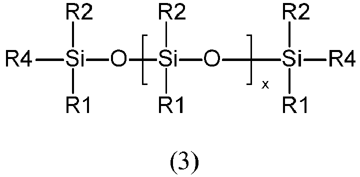 which corresponds to the compound of formula (1), wherein:
   x is an integer from 0 to 500; R³ = SiR¹R²R⁴;
   y, z = 0; and f = 2.
Item 19 is a curable composition according to item 18, wherein the cationically self-curable silicone-based oligomeric compound has a formula which corresponds to compound of formula (3), wherein: R¹ is methyl and R² is methyl.
Item 20 is a curable composition according to any of items 14 to 17, wherein the cationically self-curable silicone-based oligomeric compound is an N-alkylpropyleneimine derivative having the following formula (4): 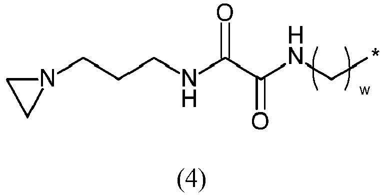 which corresponds to the compound of formula (1), wherein:
   A is (CH₂)_{w}; B is NH; D is C(O)C(O)NH; and E is 1,3-propandiyl; and
   wherein w is an integer from 1 to 10.
Item 21 is a curable composition according to any of items 14 to 17, wherein the cationically self-curable silicone-based oligomeric compound is an N-alkylbutyleneimine derivative having the following formula (5): 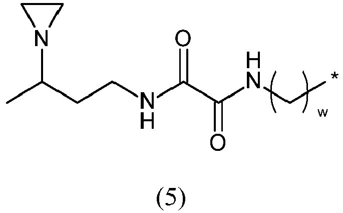 which corresponds to the compound of formula (1), wherein:
   A is (CH₂)_{w}; B is NH; D is C(O)C(O)NH; and E is 1,3-butandiyl; and
   wherein w is an integer from 1 to 10.
Item 22 is a curable composition according to any of the preceding items, wherein the cationically self-curable silicone-based oligomeric compound has the following formula (6): 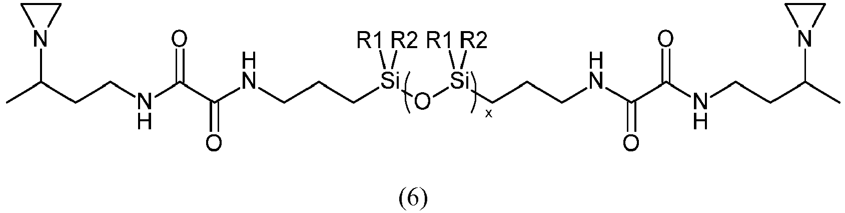 wherein:
   R¹ and R² are as defined in formula (1); and
   x is an integer in a range from 1 to 10,000, from 1 to 1000, or even from 10 to 500; and x is in particular selected such that the calculated number average molecular weight of the cationically silicone-based self-curable oligomeric compound is in a range from 1000 to 20.000 g/mol.
Item 23 is a curable composition according to item 22, wherein the cationically self-curable silicone-based oligomeric compound has a formula which corresponds to the compound of formula (6), wherein: R¹ is methyl and R² is methyl.
Item 24 is a curable composition according to any of the preceding items, wherein the curing system for the cationically self-curable silicone-based oligomeric compound is initiated at a temperature T1 which is in particular no greater than 90°C, no greater than 80°C, no greater than 60°C, no greater than 50°C, no greater than 40°C, no greater than 30°C, no greater than 25°C, no greater than 20°C, or even no greater than 15°C.
Item 25 is a curable composition according to item 24, wherein the temperature T1 is in a range from -10°C to 85°C, from 0°C to 80°C, from 5°C to 60°C, from 5°C to 50°C, from 10 to 40°C, or even from 15 to 35°C.
Item 26 is a curable composition according to any of the preceding items, wherein the curing system for the cationically self-curable silicone-based oligomeric compound comprises an ionogenic compound comprising an anion and ammonium as a cation.
Item 27 is a curable composition according to any of items 1 to 25, wherein the curing system for the cationically self-curable silicone-based oligomeric compound comprises an ionogenic compound comprising an anion and an aminium ion as a cation.
Item 28 is a curable composition according to any of item 26 or 27, wherein the ionogenic compound is an acid generating compound, in particular a protonating agent.
Item 29 is a curable composition according to any of item 26 or 28, wherein the curing system for the cationically self-curable oligomeric compound results from the protonation of ammonia by a Broensted acid or a precursor of a Broensted acid.
Item 30 is a curable composition according to any of items 26 to 29, wherein the anion of the ionogenic compound results from the deprotonation of a Broensted acid or a precursor of a Broensted acid.
Item 31 is a curable composition according to any of item 29 or 30, wherein the Broensted acid has a pKa no greater than 2.5.
Item 32 is a curable composition according to any of items 29 to 31, wherein the Broensted acid is selected from the group consisting of hexafluorophosphoric acid, hexafluoroantimonic acid, tetrafluoroboric acid, sulfonic acids, phosphonic acids, fluorinated organic acids, polymeric acids, saturated carboxylic acids, unsaturated carboxylic acids, and any combinations or mixtures thereof.
Item 33 is a curable composition according to any of items 29 to 31, wherein the Broensted acid is selected from the group consisting of hexafluorophosphoric acid, tetrafluoroboric acid, sulfonic acids, saturated carboxylic acids, and any combinations or mixtures thereof.
Item 34 is a curable composition according to any of item 32 or 33, wherein the sulfonic acid is selected from the group consisting of alkylsulphonic acids, arylsulphonic acids, fluoroalkylsulphonic acids, alkylbenzenesulphonic acids, and any combinations or mixtures thereof.
Item 35 is a curable composition according to any of items 32 to 34, wherein the sulfonic acid is selected from the group consisting of p-toluenesulphonic acid, undecylbenzenesulphonic acid, dodecylbenzenesulphonic acid, tridecylbenzenesulphonic acid, trifluoromethanesulphonic acid, methylsulphonic acid, and any mixtures thereof.
Item 36 is a curable composition according to any of items 26 to 35, wherein the anion of the ionogenic compound is selected from the group consisting of low- and non-coordinating anions, and any combinations or mixtures thereof.
Item 37 is a curable composition according to any of items 26 to 35, wherein the anion of the ionogenic compound is selected from the group consisting of low-nucleophilic anions.
Item 38 is a curable composition according to any of items 26 to 35, wherein the anion of the ionogenic compound is selected from the group consisting of PF₆⁻, BF₄⁻, SbF₆⁻ , AsF₆⁻, and SbF₅OH⁻.
Item 39 is a curable composition according to any of items 26 to 35, wherein the anion of the ionogenic compound is selected from the group consisting of PF₆⁻and BF₄⁻.
Item 40 is a curable composition according to any of item 26 or 28 to 39, wherein the ionogenic compound is selected from the group consisting of ammonium tetrafluoroborate, ammonium hexafluorophosphate, in particular ammonium hexafluorophosphate.
Item 41 is a curable composition according to any of items 27 to 39, wherein the aminium ion of the ionogenic compound results from the protonation of a N-substituted (organic) amine, in particular a primary, secondary or tertiary (organic) N-substituted amine.
Item 42 is a curable composition according to item 40, wherein the N-substituted (organic) amine has a pKa of at least 7 or greater.
Item 43 is a curable composition according to any of item 41 or 42, wherein the aminium ion of the ionogenic compound is selected from the group consisting of primary aminium cations, secondary aminium cations, tertiary aminium cations, and any mixtures thereof.
Item 44 is a curable composition according to any of items 41 to 43, wherein the aminium ion of the ionogenic compound is selected from the group consisting of secondary aminium cations, tertiary aminium cations, and any mixtures thereof.
Item 45 is a curable composition according to any of items 41 to 44, wherein the aminium ion of the ionogenic compound is selected from the group consisting of tertiary aminium cations, and any mixtures thereof.
Item 46 is a curable composition according to any of items 1 to 25, wherein the curing system for the cationically self-curable silicone-based oligomeric compound comprises at least one Broensted acid or a precursor of a Broensted acid as defined in any of items 30 to 34 and at least one antacid-acting compound.
Item 47 is a curable composition according to item 46, wherein the antacid-acting compound is selected from the group consisting of oxides, hydroxides, carbonates or carboxylates of an element of aluminum, chromium, copper, germanium, manganese, lead, antimony, tellurium, titanium or zinc, and any combinations or mixtures thereof.
Item 48 is a curable composition according to any of item 46 or 47, wherein the antacid-acting compound is selected to comprise zinc oxide, and the Broensted acid is in particular selected from the group consisting of sulfonic acids, more in particular from the group consisting of alkylsulphonic acids, arylsulphonic acids, alkylbenzenesulphonic acids, and any combinations or mixtures thereof.
Item 49 is a curable composition according to item 48, wherein the antacid-acting compound is selected to comprise zinc oxide, and the Broensted acid is selected from the group consisting of p-toluenesulphonic acid and dodecylbenzensulphonic acid, in particular p-toluenesulphonic acid.
Item 50 is a curable composition according to any of the preceding items, wherein the curing system for the cationically self-curable silicone-based oligomeric compound comprises zinc p-toluenesulphonate.
Item 51 is a curable composition according to any of the preceding items, wherein the curing system for the cationically self-curable silicone-based oligomeric compound further comprises water.
Item 52 is a curable composition according to any of the preceding items, which is a thermally-conductive gap filler composition.
Item 53 is a curable composition according to any of the preceding items, which comprises at least 30% by volume, at least 50% by volume, at least 65% by volume, at least 70% by volume, at least 75% by volume, or even at least 80% by volume of the thermally-conductive filler, based on the total volume of the curable composition.
Item 54 is a curable composition according to any of the preceding items, wherein the thermally-conductive filler is selected from the group consisting of ceramics, metals, graphite, and any combinations or mixtures thereof.
Item 55 is a curable composition according to any of the preceding items, which further comprises a silicone (inert) fluid, in particular a polydialkylsiloxane, more in particular a polydimethylsiloxane.
Item 56 is a curable composition according to any of the preceding items, which comprises:
   a) from 2 to 20 wt.%, from 2 to 18 wt.%, from 3 to 18 wt.%, from 3 to 16 wt.%, from 4 to 15 wt.%, or even from 4 to 10 wt.%, of the cationically self-curable silicone-based oligomeric compound;
   b) from 0.2 to 3 wt.%, from 0.2 to 2.5 wt.%, from 0.3 to 2 wt.%, from 0.5 to 2 wt.%, from 0.5 to 1.8 wt.%, from 0.5 to 1.5 wt.%, from 0.6 to 1.2 wt.%, or even from 0.8 to 1.2 wt.%, of the curing system;
   c) from 50 to 98 wt.%, from 55 to 98 wt.%, from 60 to 96 wt.%, from 70 to 96 wt.%, from 75 to 96 wt.%, from 80 to 96 wt.%, or even from 85 to 95 wt.%, of the thermally-conductive filler; and
   d) optionally, from 1 to 10 wt.%, from 1 to 9 wt.%, from 1.5 to 8 wt.%, from 2 to 8 wt.%, from 2 to 6 wt.%, or even from 2 to 5 wt.%, of a silicone fluid.
Item 57 is a curable composition according to any of the preceding items, which is in the form of a two-part composition having a first part and a second part, wherein:
   a) the first part comprises the curing system; and
   b) the second part comprises the base component comprising the cationically self-curable silicone-based oligomeric compound, and optionally, the silicone fluid;
   wherein the thermally-conductive filler is present in the first part and/or in the second part, and wherein the first part and the second part are kept separated prior to combining the two parts and forming the cured composition.
Item 58 is a curable composition according to any of the preceding items, which is curable at 23°C at a curing percentage greater than 90%, greater than 95%, greater than 98%, or even greater than 99%, after a curing time no greater than 72 hours, no greater than 48 hours, or even no greater than 24 hours.
Item 59 is a curable composition according to any of the preceding items, which is curable at 23°C at a curing percentage greater than 90%, greater than 95%, greater than 98%, or even greater than 99%, after a curing time no greater than 210 minutes, no greater than 180 minutes, no greater than 150 minutes, no greater than 120 minutes, no greater than 100 minutes, no greater than 90 minutes, no greater than 80 minutes, no greater than 70 minutes, no greater than 60 minutes, no greater than 50 minutes, no greater than 40 minutes, or even no greater than 30 minutes.
Item 60 is a curable composition according to any of the preceding items, which is curable without using any actinic radiation, in particular UV light, or any metallic catalyst, in particular platinum catalyst.
Item 61 is a curable composition according to any of the preceding items, which is substantially free of flame-retardant, in particular flame-retardant based on minerals, organohalogen compounds, and organophosphorus compounds.
Item 62 is a curable composition according to any of the preceding items, which has a thermal conductivity of at least 0.5 W/mK, at least 1.0 W/mK, at least 2.0 W/mK, at least 3.0 W/mK, at least 4.0 W/mK, at least 5.0 W/mK, at least 6.0 W/mK, at least 7.0 W/mK, at least 8.0 W/mK, at least 9.0 W/mK, or even at least 10 W/mK, when measured according to the test method described in the experimental section.
Item 63 is a curable composition according to any of the preceding items, which has a thermal conductivity of from 0.5 to 10 W/mK, from 1 to 8 W/mK, from 2 to 6 W/mK, from 3 to 5 W/mK, or even from 4 to 5 W/mK, when measured according to the test method described in the experimental section.
Item 64 is a curable composition according to any of the preceding items, which has a mass variation of less than 2 wt.% at a temperature greater than 250°C, greater than 300°C, greater than 350°C, or even greater than 400°C, when measured according to the thermogravimetric (TGA) test method described in the example section.
Item 65 is a curable composition according to any of the preceding items, which has a V-0 classification, when measured according to the UL-94 standard flammability test method.
Item 66 is a (partially or fully) cured composition obtainable by at least partially curing the curable composition according to any of the preceding items.
Item 67 is a (partially or fully) cured composition according to item 66, wherein the self-curing reaction product of the cationically self-curable silicone-based oligomeric compound is substantially fully cured and has, in particular, a curing percentage greater than 90%, greater than 95%, greater than 98%, or even greater than 99%.
Item 68 is a (partially or fully) cured composition according to any of item 66 or 67, wherein the self-curing reaction product of the cationically self-curable silicone-based oligomeric compound comprises or consists of a polysiloxane imine, in particular a linear or branched polysiloxane ethylenimine.
Item 69 is a battery module comprising a plurality of battery cells connected to a first base plate by a first layer of a first thermally-conductive curable (gap filler) composition according to any of the preceding items.
Item 70 is a battery subunit comprising a plurality of battery modules connected to a second base plate by a second layer of a second thermally-conductive curable (gap filler) composition, wherein each battery module comprises a plurality of battery cells connected to a first base plate by a first layer of a first thermally-conductive curable (gap filler) composition, wherein the first thermally-conductive curable (gap filler) composition and the second thermally-conductive curable (gap filler) composition are independently selected, and wherein each is a thermally-conductive curable (gap filler) composition according to any of the preceding items.
Item 71 is a method of manufacturing a battery module, which comprises the steps of:
   a) applying a first layer of a first thermally-conductive curable (gap filler) composition according to any of the preceding items to a first surface of a first base plate;
   b) attaching a plurality of battery cells to the first layer to connect the battery cells to the first base plate; and
   c) curing the first thermally-conducting curable (gap filler) composition.
Item 72 is a method of manufacturing a battery subunit, which comprises the steps of:
   a) applying a second layer of a second thermally-conductive curable (gap filler) composition according to any of the preceding items to a first surface of a second base plate;
   b) attaching a plurality of battery modules to the second layer to connect the battery modules to the second base plate; and
   c) curing the second thermally-conducting curable (gap filler) composition.
Item 73 is a method of manufacturing a thermally-conductive curable composition, comprising the steps of:
   a) providing a base component comprising a cationically self-curable silicone-based oligomeric compound;
   b) providing a curing system for the cationically self-curable oligomeric compound;
   c) providing a thermally-conductive filler; and
   d) combining the base component, the thermally-conductive filler and the curing system.
Item 74 is a method according to item 73, wherein the cationically self-curable silicone-based oligomeric compound is as described in any of items 1 to 23.
Item 75 is a method according to any of item 73 or 74, wherein the curing system is as described in any of items 24 to 51.
Item 76 is the use of a thermally-conductive curable composition according to any of items 1 to 65 or a (partially or fully) cured composition according to any of items 66 to 68, for industrial applications, in particular for automotive applications, more in particular for thermal management applications in the automotive industry.
Item 77 is the use of a thermally-conductive curable composition according to any of items 1 to 65 or a (partially or fully) cured composition according to any of items 66 to 68, for the manufacturing of a thermally-conductive gap filler composition.
Item 78 is the use of a thermally-conductive curable composition according to any of items 1 to 65 or a (partially or fully) cured composition according to any of items 66 to 68, for the manufacturing of a battery module comprising a plurality of battery cells, in particular for use in the automotive industry.
Item 79 is the use of a cationically self-curable silicone-based oligomeric compound according to any of items 1 to 23, for the manufacturing of a thermally-conductive curable composition.
Item 80 is the use of a cationically self-curable silicone-based oligomeric compound according to any of items 1 to 23, for thermal management applications, in particular in the automotive industry.
Item 81 is the use of a cationically self-curable silicone-based oligomeric compound according to any of items 1 to 23, for the manufacturing of a thermally-conductive gap filler composition.
Item 82 is the use of a cationically self-curable silicone-based oligomeric compound according to any of items 1 to 23, for the manufacturing of a battery module comprising a plurality of battery cells, in particular for use in the automotive industry.

### EXAMPLES

The present disclosure is further illustrated by the following examples. These examples are merely for illustrative purposes only and are not meant to be limiting on the scope of the appended claims.

### Test Methods:

### 1) Thermal Conductivity Measurement.

The thermal conductivity of the cured compositions is measured using the flash analysis method in a Netzsch Hyperflash LFA 467 (Netzsch, Selb, Germany) according to ASTM E1461/DIN EN821(2013). Samples of 1mm thickness are prepared by coating of the curable composition between two PET release liners with a knife coater and curing at room temperature. The samples are then carefully cut to 10 mm x 10 mm squares with a knife cutter to fit in the sample holder. Before measurement, samples are coated with a thin layer of graphite (GRAPHIT 33, Kontakt Chemie) on both sides. In a measurement, the temperature of the top side of the sample is measured by an InSb IR detector after irradiation of a pulse of light (Xenon flash lamp, 230 V, 20-30 microsecond duration) to the bottom side. Diffusivity is then calculated from a fit of the thermogram by using the Cowan method. Three measurements are done for each sample at 23 °C. For each formulation, 3 samples are prepared and measured. The thermal conductivity is calculated from the thermal diffusivity, density and specific heat capacity of each sample. The thermal capacity (Cp) is calculated in Joules per gram per Kelvin using the Netzsch-LFA Hyper Flash in combination with a standard sample (Polyceram). The density (d) is determined in grams per cubic centimeter based on the weight and geometric dimensions of the sample. Using these parameters, the thermal conductivity (L) is calculated in Watts per meter • Kelvin according to L = a • d • Cp.

### 2) Thermogravimetric Analysis (TGA).

TGA is performed with a Discovery TGA of TA instruments. Air or nitrogen is used as the flowing gas. The samples are equilibrated at 40°C and then the temperature is ramped to 900°C at a rate of 10°C/min. Each sample is analyzed twice.

### 3) Hardness.

The hardness of the compositions is measured according to ASTM D2240 with a Durometer Type A. The samples size is 10 mm x 10 mm square with a thickness of 6 mm. The load on the indenter is 12.5 N.

### 4) Flammability test.

The test is performed using the UL-94 standard, the Standard for safety of Flammability of Plastic Materials for Parts in Devices and Appliances testing. The UL-94 standard is a plastics flammability standard released by Underwriters Laboratories of the United States. The standard determines the material's tendency to either extinguish or spread the flame once the specimen has been ignited. The UL-94 standard is harmonized with IEC 60707, 60695-11-10 and 60695-11-20 and ISO 9772 and 9773. The samples size which is a 7.5 mm x 15 mm sheet with a thickness of 1 mm is exposed to a 2 cm, 50W tirrel burner flame ignition source. The test samples are placed horizontally above the flame with the test flame impinging on the bottom of the sample. For each sample, the time to extinguish is measured and V ratings are assigned. V ratings are a measure to extinguish along with the sample not burning to the top clamp or dripping molten material which would ignite a cotton indicator, as shown in Table 1 below.

**Table 1: UL94 classification (V rating).**

| UL 94 classification | V-0 | V-1 | V-2 |
|---|---|---|---|
| Burning stops within | 10s | 30s | 30s |
| Drips of burning material allowed (ignites cotton ball) | No | No | Yes |
| Total burn of sample | No | No | No |

### Raw materials:

In the examples, the following raw materials are used:
**AZISi3K** (AZS-3) is a N-alkyl bisaziridino-functional silicone-based oligomer having a number average molecular weight of about 3000 g/mol, which may be obtained from the 3M Company, USA.
**AZISi14K** (AZS-14) is a N-alkyl bisaziridino-functional silicone-based oligomer having a number average molecular weight of about 14.000 g/mol, which may be obtained from the 3M Company, USA.
**AZISi40K** (AZS-40) is a N-alkyl bisaziridino-functional silicone-based oligomer having a number average molecular weight of about 40.000 g/mol, which may be obtained from the 3M Company, USA.
**APregon4** (AP-4) is a propylene-glycol bisaziridino-functional oligomer having a number average molecular weight of about 4400 g/mol, which may be obtained from the 3M Company, USA.
**Silgel 612B** (SG-612B) is an addition-type silicone oil, commercially available from Wacker.
**Acclaim 4200** (A-4200) is a linear polypropylene ether polyol, commercially available from Covestro.
**EOx200D** (EO-200) is an inert oxalate-functional silicone fluid, which may be obtained from Wacker.
**Santicizer 141** (S-141) is 2-ethylhexyl diphenyl phosphate, flame retardant, commercially available from Valtris.
**Disperbyk-145** (D-145) is a phosphoric ester salt of a high molecular weight copolymer, dispersant, commercially available from Byk.
**Zinc tosylate** (ZnTs) is a curing agent, which may be obtained from the 3M Company, USA.
**p-toluene sulphonic acid** (TsOH) is obtained from Sigma-Aldrich.
**Silatherm advance 1438-800 EST** (ZnO) is a filler material based on zinc oxide, commercially available from Quarzwerke GmbH.
**Martoxid TM1250** is alumina, thermally conductive filler, commercially available from Huber.
**BAK10** is spherical alumina, thermally conductive filler, commercially available from Bestry.
**BAK70** is spherical alumina, thermally conductive filler, commercially available from Bestry.

### Examples:

### General preparation method for exemplary thermally-conductive gap filler composition (Example 1):

The exemplary thermally-conductive gap filler composition is prepared as a two-part formulation (Part A and Part B). Part B contains a N-alkyl bisaziridino-functional silicone-based oligomer.

### Preparation of Part B:

Part B is prepared by mixing 7.6 g of AZS-40 with 2.3 g of A-4200 and 0.16 g of D-145 in a speed-mixer container and stirred for 30s at 3000 rpm. Then, is added. Then, 54.0 g of BAK70, 18.0 g of BAK10 and 18.0 g of TM1250 are added in successive steps and mixed. The material is then degassed to avoid entrapped air.

### Preparation of Part A:

A premix is initially prepared by mixing 171 g of S-141 and 17.75 g of ZnO in a high-shear speed-mixer Dispermat and stirred for 5 min at 3000 rpm. Then, 6 g of p-toluene sulfonic acid monohydrate is added and stirred at 1000 rpm. The mixture is further stirred at 3000 rpm for 5 min. Then, 3.3 g of deionized water is added, and the mixture stirred for 10 more minutes at 2500 rpm. The mixture is then stirred in an oil bath at 80°C for 1h to give the premix. Part A is prepared by mixing 10.68 g of the premix with 0.019 g of D-145 in a speed-mixer container, and the mixture stirred for 20s at 2500 rpm. Then, 53.6 g of BAK70, 17.9 g of BAK10 and 17.9 g of TM1250 are added in three successive steps and stirred by hand.

The thermally-conductive gap filler composition is prepared by mixing 3 g of Part A with 3.12 g of Part B for one minute using scraping motions to avoid air entrainment. The gap filler composition is coated between two PET release liners with a knife coater and cured at room temperature to give the gap filler used in the analysis.

### General preparation method for exemplary thermally-conductive gap filler compositions (Examples 2-5) and Comparative Examples CE1-CE5 for testing:

The other exemplary thermally-conductive gap filler compositions (Examples 2-5), which are simplified two-part gap filler compositions, are prepared as described above, except that ZnTs is not prepared in-situ but added directly in Part A as a dispersion in water. Comparative thermally-conductive gap filler full composition CE1, as well as other comparative simplified gap filler compositions (CE2-CE5), are prepared according to the procedure described hereinbefore, except that APregon4 (CE1-CE3 and CE5) or Silgel 612B (CE4) is used instead of AZS-40. The formulations of the exemplary formulations are shown in Table 2, wherein all the values are given in grams. The exemplary and comparative gap filler compositions typically result from the mixing of Part A and Part B at a 1:1 mass ratio for one minute.

**Table 2:**

| Examples | Ex.1 | Ex.2 | Ex.3 | Ex.4 | Ex.5 | CE1 | CE2 | CE3 | CE4 | CE5 |
|---|---|---|---|---|---|---|---|---|---|---|
| AZS-3 | - | 9.7 | 6 | - | - | - | - | - | - | - |
| AZS-14 | - | - | - | 9.7 | 4 | - | - | - | - | - |
| AZS-40 | 7.6 | - | - | - | - | - | - | - | - | - |
| AP-4 | - | - | - | - | - | 7.6 | 9.7 | 6 | - | 4 |
| SG-612B | - | - | - | - | - | - | - | - | 6 | - |
| A-4200 | 2.3 | - | - | - | - | 2.3 | - | - | - | 6 |
| EO-200 | - | - | - | - | 5.8 | - | - | - | - | - |
| S-141 | 9.2 | - | - | - | - | 9.2 | - | - | - | - |
| D-145 | 0.2 | - | - | - | - | 0.2 | - | - | - | - |
| TsOH | 0.3 | - | - | - | - | 0.3 | - | - | - | - |
| ZnO | 1.0 | - | - | - | - | 1.0 | - | - | - | - |
| ZnTs | - | 0.9 | 0.7 | 0.9 | 0.9 | - | 0.9 | 0.7 | - | 0.9 |
| TM1250 | 36 | 18 | 18.8 | 18 | 18 | 36 | 18 | 18.8 | 18.8 | 18 |
| BAK10 | 36 | 18 | 18.8 | 18 | 18 | 36 | 18 | 18.8 | 18.8 | 18 |
| BAK70 | 108 | 54.2 | 56.5 | 54.2 | 54.2 | 108 | 54.2 | 56.5 | 56.5 | 54.2 |
| H₂O | 0.2 | 0.3 | 0.2 | 0.3 | 0.3 | 0.2 | 0.3 | 0.2 | 0 | 0.3 |
| | | | | | | | | | | |
| TC filler loading (Vol%) | 70 | 70 | 80 | 70 | 70 | 70 | 70 | 80 | 80 | 70 |

### High-temperature resistance performance

The high-temperature resistance performance of the compositions of Ex.1 and comparative example CE1 is assessed by TGA measurements. The performance results are shown in Table 3.

**Table 3: Results of the high-temperature resistance performance test.**

| Examples | Ex.1 | CE1 |
|---|---|---|
| Temperature for complete degradation (°C) | 700 | 400 |

As can be seen from the results shown in Table 3, the thermally-conductive gap filler composition according to the present disclosure (Ex.1) provides much better resistance to degradation at elevated temperature than a comparative polyether-based composition (CE1).

### Processability performance

The processability performance at high loading of thermal conductive filler of the compositions of Example 3 and comparative examples CE3 and CE4 is assessed by visual observation. Visual observation shows that, at similar thermally-conductive filler loading (80 Vol%), the thermally-conductive gap filler composition according to the present disclosure (Ex.3) stills forms a homogeneous pasty composition, while the comparative compositions (CE3 and CE4) form non-followable materials.

### Thermal conductivity performance

The thermal conductivity performance of the compositions of Ex.2 and Ex.3 and comparative examples CE2 and CE3 is determined by flash analysis method. The performance results are shown in Table 4.

**Table 4: Results of the thermal conductivity test.**

| | Ex.2 | CE2 | Ex.3 | CE3 |
|---|---|---|---|---|
| Thermal conductivity (W/mK) | 2.9 | 2.4 | 4.5 | 4.2 |
| TC filler loading (Vol%) | 70 | 70 | 80 | 80 |

As can be seen from the results shown in Table 4, the thermally-conductive gap filler compositions according to the present disclosure (Ex.2 and Ex.3) provide improved performance and characteristics as to thermal conductivity, when compared to comparative compositions (CE2 and CE3) at similar thermally-conductive filler loading.

### Softness performance

The softness performance of the compositions of Ex.4 and Ex.5 and comparative examples CE2 and CE5 is determined by hardness measurements. The experiments also compare the softness effect brought by the incorporation of different fluids. The performance results are shown in Table 5.

**Table 5: Results of the softness test.**

| | Ex.4 | CE2 | Ex.5 | CE5 |
|---|---|---|---|---|
| Hardness (shoreA) | 87 | 92 | 32 | 69 |
| Amount of fluid (wt.%) | 0 | 0 | 6 | 6 |
| Type of fluid | silicone | polyether | silicone | polyether |

As can be seen from the results shown in Table 5, the thermally-conductive gap filler composition according to the present disclosure (Ex.4) provides initial improved softness, when compared to comparative compositions (CE2). Moreover, the results show that the thermally-conductive gap filler composition according to the present disclosure (Ex.5) provides improved softness increase, when compared to comparative composition (CE5), when using similar weight percentage of an appropriate inert fluid.

### Stability upon ageing performance

The stability of the composition of Ex.4 and comparative example CE2 upon various ageing conditions is tested by hardness variation measurements. The performance results are shown in Table 6.

**Table 6: Results of stability upon ageing.**

| | Ex.4 | CE2 | | Ex.4 | CE2 |
|---|---|---|---|---|---|
| Hardness (shoreA) | 89 | 93 | | 87 | 69 |
| Ageing conditions | 1 day at 90°C | 1 day at 90°C | | 21 days at 90°C | 21 days at 90°C |

As can be seen from the results shown in Table 6, the thermally-conductive gap filler composition according to the present disclosure (Ex.4) provides improved stability upon ageing, when compared to comparative composition (CE2).

### Flammability performance

The flammability performance of the composition of Ex.2 and comparative example CE2 upon various ageing conditions is tested on various aspects. The performance results are shown in Table 7.

**Table 7: Results of the flammability test.**

| | Ageing conditions | Time until burn (s) | After burn time (s) | Whole sample burning down? | Rating |
|---|---|---|---|---|---|
| Ex.2 | 4 days at 23°C | - | - | no | V-0 |
| CE2 | 4 days at 23°C | 6 | 120 | yes | fail |
| | | | | | |
| Ex.2 | 3 days at 90°C | - | - | no | V-0 |
| CE2 | 3 days at 90°C | 6 | 130 | yes | fail |

As can be seen from the results shown in Table 7, the thermally-conductive gap filler composition according to the present disclosure (Ex.2) provides improved flammability characteristics and obtains a V-0 rating upon various ageing conditions, when compared to comparative composition (CE2) which fails to pass the flammability test.

## Claims

1. A thermally-conductive curable composition comprising:
a) a base component comprising a cationically self-curable silicone-based oligomeric compound;
b) a curing system for the cationically self-curable silicone-based oligomeric compound; and
c) a thermally-conductive filler.

2. A curable composition according to claim 1, wherein the cationically self-curable silicone-based oligomeric compound has a number average molecular weight of at least 500 g/mol, at least 1000 g/mol, at least 1500 g/mol, at least 2000 g/mol, at least 2500 g/mol, or even at least 3000 g/mol.

3. A curable precursor according to any of claim 1 or 2, wherein the cationically self-curable silicone-based oligomeric compound is a polyfunctional compound comprising at least one cyclic amine, preferably two cyclic amines.

4. A curable precursor according to any of the preceding claims, wherein the cationically self-curable silicone-based oligomeric compound is an aziridino-functional polysiloxane oligomer, in particular a N-alkyl aziridino-functional polysiloxane oligomer.

5. A curable composition according to any of the preceding claims, wherein the cationically self-curable silicone-based oligomeric compound has the following formula (1): 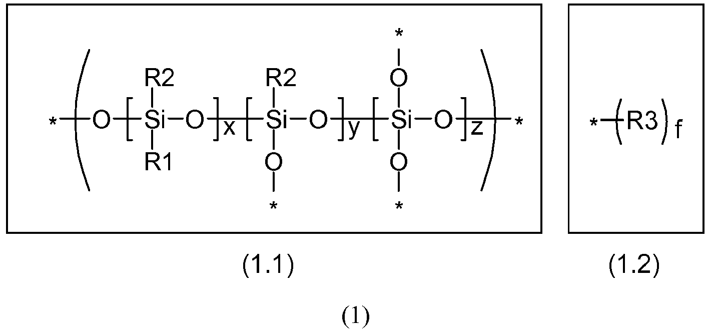 wherein:
R¹ is selected from the group consisting of H, C₁ -C₁₂ -alkyl, C₂ -C₁₂ -alkenyl, C₂ - C₁₂ -alkynyl, C₇ -C₁₅ -alkaryl, C₇ -C₁₅ -aralkyl or C₃ -C₁₂ -cycloalkyl, and these radicals may be substituted partially, fully or in a mixed manner by Cl or F and/or may contain from 0 to 5 heteroatoms from the group consisting of O, N and S;
R² is a radical from the selection of R¹ and/or R⁴; and
R³ is SiR¹₃ or SiR¹₂ R⁴,
where R⁴ has the following formula (2): 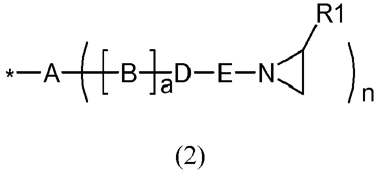 and
A is an (n+1)-valent saturated, unsaturated or aromatic, linear, branched or cyclic hydrocarbon radical, which may contain from 0 to 5 heteroatoms from the group consisting of O, N and S and comprises from 1 to 18 carbon atoms, or even from 1 to 12 carbon atoms;
B is selected from the group consisting of O, S and NR¹;
D is selected from the group consisting of C(O)O, C(O)NR¹, C(O), C(O)C(O), C(O) (CH₂)m (C(O), C(S)NR¹ and CH₂;
E is a divalent saturated or unsaturated, linear, branched or cyclic hydrocarbon radical, which may contain from 0 to 5 heteroatoms from the group consisting of O, N and S and comprises from 0 to 18 carbon atoms, or even from 1 to 12 carbon atoms;
a is 0 or 1;
f is an integer from 2 to 1000, from 2 to 100, or even from 2 to 50;
n and m are each an integer from 1 to 10, from 1 to 5, or even from 1 to 3; and
x, y and z are each either 0 or integers whose sum is from 1 to 10.000, from 1 to 1000, or even from 10 to 500.

6. A curable composition according to claim 5, wherein the cationically self-curable silicone-based oligomeric compound has the following formula (3): 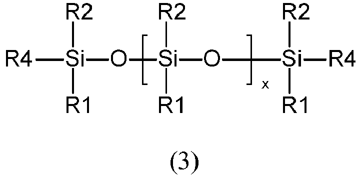 which corresponds to the compound of formula (1), wherein:
x is an integer from 0 to 500; R³ = SiR¹R²R⁴;
y, z = 0; and f = 2.

7. A curable composition according to any of the preceding claims, wherein the cationically self-curable silicone-based oligomeric compound has the following formula (6): 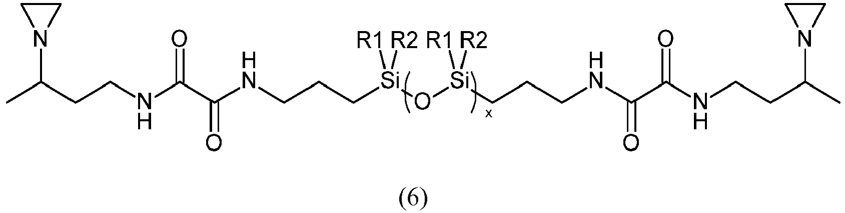 wherein:
R¹ and R² are as defined in formula (1); and
x is an integer in a range from 1 to 10,000, from 1 to 1000, or even from 10 to 500;
and x is in particular selected such that the calculated number average molecular weight of the cationically silicone-based self-curable oligomeric compound is in a range from 1000 to 20.000 g/mol.

8. A curable composition according to any of the preceding claims, wherein the curing system for the cationically self-curable silicone-based oligomeric compound comprises an ionogenic compound comprising either an anion and either ammonium or aminium as a cation.

9. A curable composition according to any of the preceding claims, which is a thermally-conductive gap filler composition comprising a thermally-conductive filler.

10. A curable composition according to any of the preceding claims, which comprises at least 30% by volume, at least 50% by volume, at least 65% by volume, at least 70% by volume, at least 75% by volume, or even at least 80% by volume of the thermally-conductive filler, based on the total volume of the curable composition.

11. A curable composition according to any of the preceding claims, which comprises:
a) from 2 to 20 wt.%, from 2 to 18 wt.%, from 3 to 18 wt.%, from 3 to 16 wt.%, from 4 to 15 wt.%, or even from 4 to 10 wt.%, of the cationically self-curable silicone-based oligomeric compound;
b) from 0.2 to 3 wt.%, from 0.2 to 2.5 wt.%, from 0.3 to 2 wt.%, from 0.5 to 2 wt.%, from 0.5 to 1.8 wt.%, from 0.5 to 1.5 wt.%, from 0.6 to 1.2 wt.%, or even from 0.8 to 1.2 wt.%, of the curing system;
c) from 50 to 98 wt.%, from 55 to 98 wt.%, from 60 to 96 wt.%, from 70 to 96 wt.%, from 75 to 96 wt.%, from 80 to 96 wt.%, or even from 85 to 95 wt.%, of the thermally-conductive filler; and
d) optionally, from 1 to 10 wt.%, from 1 to 9 wt.%, from 1.5 to 8 wt.%, from 2 to 8 wt.%, from 2 to 6 wt.%, or even from 2 to 5 wt.%, of a silicone fluid.

12. A cured composition obtainable by at least partially curing the curable composition according to any of the preceding claims.

13. A method of manufacturing a thermally-conductive curable composition, comprising the steps of:
a) providing a base component comprising a cationically self-curable silicone-based oligomeric compound;
b) providing a curing system for the cationically self-curable oligomeric compound;
c) providing a thermally-conductive filler; and
d) combining the base component, the thermally-conductive filler and the curing system.

14. Use of an acid-curable composition according to any of claims 1 to 11 or a cured composition according to claim 12, for thermal management applications in the automotive industry, in particular for the manufacturing of a thermally-conductive gap filler composition.

15. Use of an acid-curable composition according to any of claims 1 to 11 or a cured composition according to claim 12, for the manufacturing of a battery module comprising a plurality of battery cells, in particular for use in the automotive industry.
